# EUROPEAN PATENT APPLICATION

(11) **EP 4 131 121 A1**
(43) Date of publication of application: **08.02.2023**
(21) Application number: 21774716.1
(22) Date of filing: 08.03.2021
(51) Int. Cl.: G06Q 30/06, G06Q 50/10

(54) **EVENT DATA PROCESSING DEVICE AND VEHICLE ASSESSMENT SYSTEM**

(30) Priority: 25.03.2020 JP 2020054397
(71) Applicant: Bosch Corporation, Tokyo 150-8360 (JP)
(72) Inventor: SATO, Rentaro, Tokyo 150-8360 (JP); TAGUCHI, Tetsuya, Tokyo 150-8360 (JP)
(74) Representative: Bee, Joachim
(86) International application number: PCT/JP2021/008938
(87) International publication number: WO 2021/192954

(57) **Abstract**

The present invention provides an event data processing device and a vehicle assessment system capable of generating accident history report data, which is used for assessment of a used vehicle, on the basis of event data output from an event data recording section provided to the vehicle.

An event data processing device (10) includes an accident history report generation section (21) that generates an accident history report (30) used for assessment of a vehicle (61). The accident history report generation section (21) extracts some of data on accident history of the vehicle (61) from event data that is output from an event data storage section (69) provided to the vehicle (61) and executes specified arithmetic processing to generate the accident history report (30).

## Description

### Technical Field

The present invention relates to an event data processing device and a vehicle assessment system that generate data on accident history of a vehicle.

### Background Art

In recent years, vehicles have been obligated to be equipped with a device having a function to record data on crash phenomena that have occurred (hereinafter also referred to as "event data"), and such a device is also referred to as an event data recorder (EDR). Such event data is retrieved by using a dedicated external tool, which is also referred to as crash data retrieval (CDR), after occurrence of the crash, and is used to comprehend a status of the vehicle at the time of the crash. For example, a crash visualization device is proposed in PTL 1. The crash visualization device uses various types of travel information collected by onboard devices to provide a display with which the status of the vehicle at the time of the crash can be comprehended at a glance.

### Citation List

### Patent Literature

PTL 1: JP-A-2018-524308

### Summary of Invention

### Technical Problem

By the way, when a used vehicle is bought or sold, accident history of a target vehicle is important information. Conventionally, when evaluating an assessed price of the used vehicle, an assessor visually inspects exterior and interior of the target vehicle. However, it is not easy to comprehend the complete accident history of the vehicle by the visual inspection. In addition, since the above-described event data includes the various types of the information, it is not easy to decipher an output report. The crash visualization device disclosed in PTL 1 provides the display that promotes comprehension of the status of the vehicle at the time of the crash. However, there is a case where information that is required for assessment of the used vehicle is not included in the information on the status of the vehicle at the time of the crash. In such a case, the information on the status of the vehicle at the time of the crash is not suited information for the assessment of the used vehicle.

The present invention has been made in view of the above problem and therefore has a purpose of providing an event data processing device and a vehicle assessment system capable of generating accident history report data, which is used for assessment of a used vehicle, on the basis of event data output from an event data recording section provided to the vehicle.

### Solution to Problem

An aspect of the present invention provides an event data processing device that includes an accident history report generation section that generates an accident history report used for assessment of a vehicle. The accident history report generation section extracts some of data on accident history of the vehicle from event data that is output from an event data storage section provided to the vehicle, and executes specified arithmetic processing to generate the accident history report.

Another aspect of the present invention provides a vehicle assessment system that includes: an assessor terminal that retrieves event data stored in an event data storage section provided to a vehicle; and an event data processing device that obtains the event data sent from the assessor terminal. The event data processing device extracts some of data on accident history of the vehicle from the acquired event data, executes specified arithmetic processing to generate an accident history report, and sends the accident history report to the assessor terminal. The assessor terminal is configured to be able to output the received accident history report.

### Advantageous Effects of Invention

According to the present invention that has been described so far, the accident history report data that is used for the assessment of the used vehicle can be generated on the basis of the event data that is output from the event data recording section provided to the vehicle.

### Brief Description of Drawings

Fig. 1 is a schematic view illustrating an overall configuration example of a vehicle assessment system according to an embodiment of the present invention.
Fig. 2 is a block diagram illustrating a functional configuration of the vehicle assessment system according to the embodiment.
Fig. 3 is a flowchart illustrating an example of processing executed by an assessor terminal according to the embodiment.
Fig. 4 is an explanatory table illustrating a display example of an accident history report.
Fig. 5 is an explanatory view illustrating a display example of another accident history report.
Fig. 6 is a flowchart illustrating an example of processing executed by a management server according to the embodiment.

### Description of Embodiments

A detailed description will hereinafter be made on a preferred embodiment of the present invention with reference to the accompanying drawings. In the present specification and the drawings, components having substantially the same functional configuration will be denoted by the same reference sign, and a description thereon will not be repeated.

### <1. Overall Configuration Example of Vehicle Assessment System>

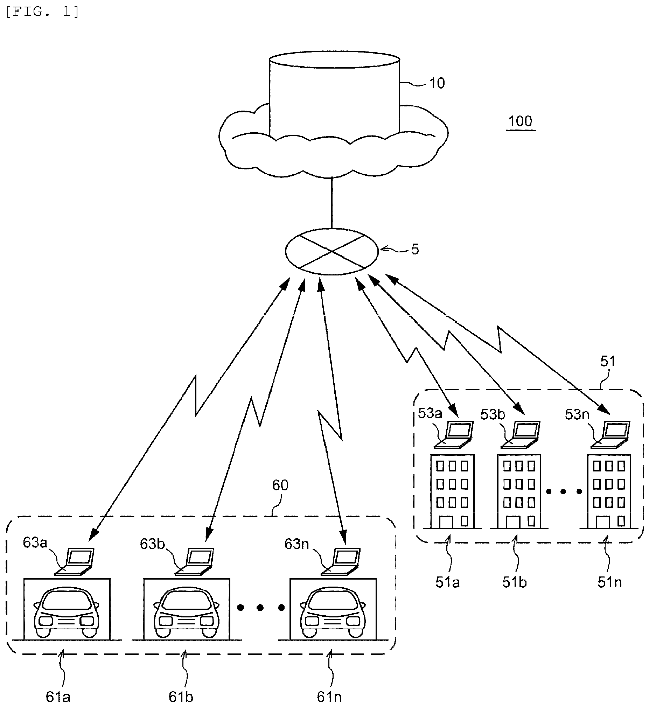

First, a description will be made on an example of an overall configuration of a vehicle assessment system according to an embodiment of the present invention. Fig. 1 is a schematic view illustrating an example of an overall configuration of a vehicle assessment system 100 according to this embodiment.

The assessment system 100 includes a management server 10 and assessor terminals 63a, 63b...63n (hereinafter collectively referred to as assessor terminals 63 unless those have to be particularly distinguished). The assessor terminals 63a, 63b...63n are mainly used by dealers and assessors of used vehicles (hereinafter also collectively referred to as "assessors 60") and are respectively connected to assessment target vehicles 61a, 61b...61n (hereinafter collectively referred to as vehicles 61 unless those have to be particularly distinguished) via data retrieval tools, which are not illustrated. The management server 10 and the assessor terminal 63 are configured to be mutually communicable via a communication network 5 such as mobile communication or Wi-fi. The communication network 5 may be a wireless or wired communication network. In addition, the communication network 5 may be a dedicated line for the assessment system 100.

The assessor terminal 63 may be constructed of a general-purpose computer device such as a laptop computer or a mobile terminal device, and may be a dedicated terminal device for the assessment system 100. The assessor terminal 63 that is used by the assessor 60 is connected to the assessment target vehicle 61 via the data retrieval tool, and retrieves event data (hereinafter also referred to as "event data recorder (EDR) data") that is stored in an event data storage section provided to the vehicle 61. In this embodiment, the assessor terminal 63 sends the retrieved EDR data to the management server 10.

The assessor terminal 63 may be configured to generate an event data report (hereinafter also referred to as a "CDR report") on the basis of the retrieved EDR data. The CDR report is a report in which various types of data included in the EDR data of each of the vehicles 61 are put together in a specified format, and is used not only for assessment of the vehicle 61 but also for analysis and the like of a state of the respective vehicle 61 at the time of an accident. The assessor terminal 63 sends the generated CDR report to the management server 10.

The management server 10 has a function as the event data processing device according to the present invention. The management server 10 may be a cloud server, for example. The management server 10 obtains the EDR data that is sent from the assessor terminal 63, and stores the EDR data in a database. In addition, the management server 10 extracts some of data on accident history from the stored EDR data, and executes specified arithmetic processing to generate an accident history report. The management server 10 sends data on the generated accident history report to the assessor terminal 63.

The management server 10 is configured to be mutually communicable, via the communication network 5, with terminals 53a, 53b...53n (hereinafter collectively referred to as expert-side terminals 53 unless those have to be particularly distinguished) used by experts, organizations, and the like 51a, 51b...51n (hereinafter these experts, organizations, and the like will be referred to as "experts 51") that request provision of the CDR report. Here, the management server 10 may have a function to generating the CDR report on the basis of the EDR data.

A communication network that connects the expert-side terminal 53 and the management server 10 may be a common network with the communication network 5 that connects the assessor terminal 63 and the management server 10, or may be a different network therefrom. In response to the request from the expert-side terminal 53, the management server 10 sends data on the CDR report of the desired vehicle 61 to the expert-side terminal 53. The expert-side terminal 53 and the assessor terminal 63 may be the same terminal device.

In the assessment system 100 according to this embodiment, communication between the management server 10 and the expert-side terminal 53 or the assessor terminal 63 is established via the communication network 5. However, data exchange between the management server 10 and the expert-side terminal 53 or the assessor terminal 63 may partially be executed without the communication network 5 being interposed therebetween. For example, the expert 51 or the assessor 60 may send, to an administrator of the management server 10, a request for the CDR report or the accident history report by means such as a letter or an e-mail. In addition, the administrator of the management server 10 may provide the expert 51 or the assessor 60 with a storage medium that stores the data on the generated CDR report or the accident history report, or may provide the expert 51 or the assessor 60 with the data on the CDR report or the accident history report by an e-mail or the like.

### <2. Configuration Example Related to Assessment of Vehicle>

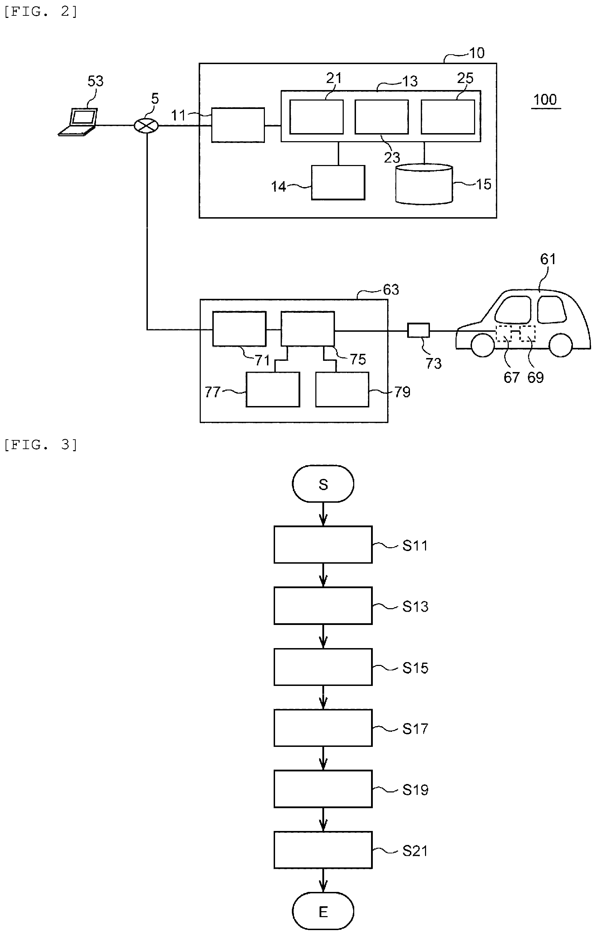

Fig. 2 is a block diagram illustrating functional configurations of the management server 10 and the assessor terminal 63 in the vehicle assessment system 100. Fig. 2 only illustrates the single assessor terminal 63 and the single expert-side terminal 53 of the plural assessor terminals 63 and the plural expert-side terminals 53 that are connected to the management server 10.

### (Assessor Terminal)

The assessor terminal 63 includes a communication section 71, a control section 75, a storage section 77, and a display section 79. The assessor terminal 63 also includes an input section, which is not illustrated and accepts an input operation by a worker. Although the assessor terminal 63 is illustrated as a single device in Fig. 2, the assessor terminal 63 may be configured that plural devices are mutually communicable.

The communication section 71 is an interface for communicating with the management server 10 via the communication network 5. The communication section 71 is constructed of an interface for wireless communication or wired communication that is compatible with a communication method of the communication network 5. For example, the communication network 5 may be the mobile communication, the Internet such as Wi-fi, or the dedicated line.

The assessor terminal 63 is connected to a control system 67 of the assessment target vehicle 61 via a data retrieval tool 73. The data retrieval tool 73 is a dedicated external tool for retrieving the EDR data and is also referred to as a CDR tool. For example, the control system 67 of the vehicle 61 includes devices such as plural electronic control units (ECUs) that are communicably connected with each other via a controller area network (CAN) and the Local Inter Net (LIN). The data retrieval tool 73 is configured to include an interface that is compatible with a CAN protocol, for example.

Here, the control system 67 of the vehicle 61 includes an event data storage section 69. The control system 67, to which the assessment system 100 according to this embodiment can be applied, in the vehicle 61 is provided with an event data storage function to store data (the EDR data) on various phenomena (events) that have occurred to the vehicle 61. The event data storage section 69 includes at least one of a storage element and a storage medium. Examples of the storage element are random access memory (RAM) and read only memory (ROM). Examples of the storage medium are a hard disk drive (HDD), a compact disc (CD), a digital versatile disc (DVD), a solid-state drive (SSD), a universal serial bus (USB) flash drive, and a storage device. The event data storage section 69 stores various pieces of the EDR data.

In this embodiment, the EDR data includes data on an operation state or a travel state of the vehicle 61 at the time of a crash of the vehicle 61 and on a shock applied to the vehicle 61. For example, as the data on the operation state or the travel state of the vehicle 61 at the time of the crash of the vehicle 61 and on the shock applied to the vehicle 61, one or a plurality of the following data pieces is included.
- Number of crash phenomena from time of production of the vehicle 61 to time of retrieval of the EDR data
- Date and time of the crash phenomenon
- Type of the crash phenomenon (crash position)
- Maximum speed change amount in a vehicle length direction at the time of the crash
- Maximum speed change amount in a vehicle width direction at the time of the crash
- Duration until the maximum speed change occurs at the time of the crash
- Vehicle speed, steering angle, accelerator operation amount, and brake operation amount at the time of the crash
- Actuation status of an airbag system at the time of the crash
- Number of times an ignition switch is turned on or number of times an engine is started from the time of the production of the vehicle 61 to the time of the crash
- Number of times the ignition switch is turned on or number of times the engine is started from the time of the production of the vehicle 61 to the time of retrieval of the EDR data

For example, every time such a crash occurs that a change amount of a sensor value of an acceleration sensor or an angular velocity sensor provided to the vehicle 61 exceeds a specified threshold value, the data on the crash of the vehicle 61 is stored as data that is detected by an electronic control unit for controlling various systems mounted to the vehicle 61.

Each of the maximum speed change amount in the vehicle length direction at the time of the crash and the maximum speed change amount in the vehicle width direction at the time of the crash can be a maximum value in data on the speed change amount that is recorded in shorter one of a period of 250 milliseconds from the time of the occurrence of the crash at which the change amount of the sensor value of the acceleration sensor or the angular velocity sensor exceeds the specified threshold value or a period that is obtained by adding 30 milliseconds to a period from the time of the occurrence of the crash to time at which acceleration or an angular velocity becomes zero, for example. Similarly, the duration until the occurrence of the maximum speed change at the time of the crash can be an elapsed time until generation of the maximum speed change amount that is identified in shorter one of the period of 250 milliseconds from the time of the occurrence of the crash or the period that is obtained by adding 30 milliseconds to the period from the time of the occurrence of the crash to time at which the acceleration or the angular velocity becomes zero.

The actuation status of the airbag system includes information on whether a warning lamp that indicates abnormality of a front airbag device is lit. That is, the actuation status of the airbag system is used as information for determining whether the airbag system is in a state of being actuated normally. In addition, the actuation status of the airbag system includes information on an elapsed time from the time of the crash to time at which airbags at a driver's seat and a passenger seat are each deployed. Both of these pieces of the information are used as information for determining presence or absence of failure or responsiveness of the airbag system.

For example, as another piece of the EDR data, one or a plurality of the following data pieces is included.
- Malfunction in a communication state of the control system
- Failure of the control system
- Failure of each controller or sensor device
- Self-diagnosis result of the control system
- Malfunction data at the time of manufacturing

The storage section 77 stores a computer program that is used for assessment work of the vehicle 61 or information such as a parameter used to execute the program. The storage section 77 includes at least one of a storage element, such as the RAM or the ROM, and a storage medium, such as the HDD, the CD, the DVD, the SSD, the USB flash drive, or the storage device.

The display section 79 displays an operation guide, an operation screen, a progress status, a processing result, and the like when the computer program used for the assessment work is executed. The display on the display section 79 is controlled by the control section 75. The display section 79 is constructed of a display device such as a liquid-crystal panel.

For example, the control section 75 is configured to include a processor such as a central processing unit (CPU) or a microprocessing unit (MPU) and an electric circuit. The control section 75 may partially or entirely be constructed of one whose firmware and the like can be updated, or may partially or entirely be a program module or the like that is executed by a command from the CPU or the like.

The control section 75 executes processing to retrieve the EDR data that is stored in the event data storage section 69 of the vehicle 61. For example, the control section 75 retrieves various pieces of the EDR data that are stored in the event data storage section 69 when EDR data retrieval processing starts being executed in a state where the assessor terminal 63 is connected to the control system 67 of the vehicle 61 and the computer program in the assessment system is activated.

When retrieving the EDR data, the control section 75 also retrieves at least some data of data on a country of manufacture, a manufacturer, and a model name of the vehicle 61 as well as on a type of the control system, a version of the control system, part numbers of onboard devices, dates of manufacture of the onboard devices, and the like (hereinafter these pieces of the data will also be referred to as "vehicle system identification data") that are stored in the control system 67. The vehicle system identification data may include data on a type or a specification of the device such as the sensor that is mounted to the vehicle 61. However, some or all of these pieces of the vehicle system identification data may be input to the assessor terminal 63 by the assessor 60. For example, a registration year of the vehicle 61 and date of manufacture of a seat-belt device may be data that is input by the assessor 60.

The control section 75 sends the retrieved EDR data and vehicle system identification data to the management server 10 via the communication section 71. At this time, in addition to the vehicle system identification data, the control section 75 may only send, to the management server 10, data that is selected in advance as necessary data for an analysis of the crash occurred to the vehicle 61 (hereinafter also referred to as "crash-related event data") of the retrieved EDR data.

At the time, the control section 75 may convert the crash-related event data and the vehicle system identification data into the CDR report in a specified format, and may then send the CDR report in the specified format to the management server 10. The CDR report may be generated according to a known CDR report format. The control section 75 may store data to be sent to the management server 10 or the generated CDR report in the storage section 77. However, since the EDR data that is retrieved from the event data storage section 69 includes the various pieces of the data, the control section 75 preferably transfers the data to be sent to the management server 10 without storing such data in the storage section 77.

### (Management Server)

The management server 10 includes a communication section 11, a control section 13, a storage section 14, and a database 15. The communication section 11 is an interface for communicating with the assessor terminal 63 and the expert-side terminal 53 via the communication network 5. The communication section 11 is constructed of an interface for the wireless communication or the wired communication that is compatible with the communication method of the communication network 5. In the case where the communication network between the expert-side terminal 53 and the management server 10 differs from the communication network 5 between the assessor terminal 63 and the management server 10, the communication section 11 may include plural communication interfaces.

Each of the storage section 14 and the database 15 is configured to include at least one of a storage element, such as the RAM or the ROM, and a storage medium, such as the HDD, the CD, the DVD, the SSD, the USB flash drive, or the storage device. The storage section 14 and the database 15 may be configured as a single storage section or may be configured as separate storage sections. The storage section 14 stores an event data processing program that is executed by the control section 13, parameters that are used to execute the program, and the like. The database 15 stores a pair of the vehicle system identification data and one of the EDR data and the crash-related event data or stores the data on the CDR report sent from the assessor terminal 63 (hereinafter also referred to as "received event data").

The control section 13 is configured to include a processor such as the CPU or the MPU and an electric circuit, for example. The control section 13 may partially or entirely be constructed of one whose firmware and the like can be updated, or may partially or entirely be a program module or the like that is executed by a command from the CPU or the like. The control section 13 includes an accident history report generation section 21, an accident occurrence information generation section 23, and an event data report output section 25. These accident history report generation section 21, accident occurrence information generation section 23, and event data report output section 25 may be functions that are implemented when the processor such as the CPU executes the program.

The accident history report generation section 21 extracts some of the data on the accident history of the assessment target vehicle 61 from the received event data stored in the database 15, and executes the specified arithmetic processing to generate the accident history report. The accident history report is generated in the specified format when some of the data on the accident history, which is required for the assessment of the vehicle 61, is extracted from the received event data and the specified arithmetic processing is executed. For example, the data on the accident history report may be data in a comma-separated values (CSV) format. The accident history report generation section 21 sends the data on the generated accident history report to the assessor terminal 63.

A user who can view or obtain the accident history report is restricted by an identification code or the like of a user of the assessor terminal 63. The accident history report generation section 21 may reply to the assessor terminal 63 with the data on the generated accident history report when the received event data is sent from the assessor terminal 63 that is connected to the specific vehicle 61. Alternatively, when the user (the assessor terminal 63) who has the authority to view or the authority to obtain the accident history report of the vehicle 61 requests provision of the accident history report data of the specific vehicle 61, the accident history report generation section 21 may send the data on the accident history report to the assessor terminal 63.

The accident history report at least includes the data on the manufacturer, the model name, and a body identification number of the vehicle 61, the number of the crash phenomena from the time of the production of the vehicle 61 to the time of the retrieval of the EDR data, the type of the crash phenomenon, and the shock applied to the vehicle 61 at the time of the crash. The data on the manufacturer, the model name, and the body identification number of the vehicle 61 is information for identifying the vehicle 61. The number of the crash phenomena is data on the number of the crashes in which the vehicle 61 has been involved since the production of the vehicle 61. The type of the crash phenomenon is data on whether each of the crashes is a frontal crash, a front offset crash, a side crash, a rear crash, or a rear offset crash, and is information for identifying the crash position of the vehicle 61. The data on the shock applied to the vehicle 61 at the time of the crash includes data on the change amount of the vehicle speed, a load input direction, and the actuation status of the airbag system of the vehicle 61 at the time of each of the crashes, and is information with which damage to an undercarriage structure of the vehicle 61 can be estimated.

In addition to the above, the accident history report may also include data on the number of times the ignition switch is turned on or the number of times the engine is started from the time of the production of the vehicle 61 to the time of the crash or the time of the retrieval of the EDR data. These pieces of the data are information with which the number of times the vehicle 61 is used can be determined.

The accident history report may also include data on registration date of the vehicle 61, manufactured date of the seat-belt device, a part number of an airbag control module (ACM), and the like. These data are information with which a possibility of replacement of any of the onboard devices or a possibility of operation failure associated therewith can be determined.

The accident history report generation section 21 extracts, from the received event data, the data that is used to generate the accident history report. In addition, the accident history report generation section 21 executes processing to calculate the data, such as the change amount of the vehicle speed and the load input direction, that is used to generate the accident history report on the basis of the received event data.

The accident occurrence information generation section 23 generates information that notifies a possibility of an accident estimated on the basis of the received event data. For example, in the case where the date of manufacture of the seat-belt device does not match the registration date of the vehicle 61, the accident occurrence information generation section 23 generates information notifying that the accident requiring the replacement of the seat-belt device has possibly occurred. In addition, for example, a version of the airbag system or software of the airbag system is older than an estimated version, the accident occurrence information generation section 23 generates information notifying that an airbag controller has been replaced and that an accident in which an airbag deployed has possibly occurred. In addition to the above, the accident occurrence information generation section 23 may generate information notifying the possibility of the accident of the vehicle 61 that is estimated on the basis of the received event data.

The accident occurrence information generation section 23 sends the generated information on the possibility of the accident to the assessor terminal 63. The accident occurrence information generation section 23 may always send, to the assessor terminal 63, the information on the possibility of the accident together with the data on the accident history report, or may send the information on the possibility of the accident to the assessor terminal 63 when the assessor terminal 63 requests provision of the information on the possibility of the accident.

The event data report output section 25 sends, to the expert-side terminal 53, the CDR report in the specified format that includes the data not included in the accident history report. A user who can view or obtain the CDR report is restricted by an identification code or the like of a user of the expert-side terminal 53. When the user (the expert-side terminal 53) who has the authority to view or the authority to obtain the accident history report of the specific vehicle 61 requests provision of the data on the CDR report of such a vehicle 61, the event data report output section 25 sends the data on the CDR report to the expert-side terminal 53.

In the case where the data on the CDR report is generated in the assessor terminal 63 and is stored in the database 15 of the management server 10, the event data report output section 25 sends the data on the CDR report of the specific vehicle 61, which is requested from the expert-side terminal 53, to the assessor terminal 63. In addition, in the case where the vehicle system identification data and one of the EDR data and the crash-related event data are sent from the assessor terminal 63, the event data report output section 25 refers to the database 15 to generate the CDR report and sends the CDR report to the expert-side terminal 53 when provision of the event data report of the specific vehicle 61 is requested from the expert-side terminal 53.

A range of the users (the assessors) who can view or obtain the accident history report is set to be wider than a range of the users (the experts) who can view or obtain the CDR report. This is because, while the CDR report includes the various types of the data and a use range thereof is limited to the accident analysis and the like, the accident history report only includes the limited data that is required for the assessment of the vehicle 61, and is the data used for evaluation of the assessment.

### <3. Operation Example of Assessment System>

Next, an operation example of the vehicle assessment system 100 according to this embodiment will be described by being divided into an operation example of the assessor terminal 63 and an operation example of the management server 10. In the assessment system 100, which will be described below, the assessor terminal 63 is configured to generate the CDR report on the basis of the EDR data and the vehicle system identification data retrieved from the event data storage section 69 of the vehicle 61 and send the CDR report to the management server 10.

### (3-1. Operation Example of Assessor Terminal)

Fig. 3 is a flowchart illustrating an example of processing that is executed by the control section 75 of the assessor terminal 63.

First, the assessor terminal 63 is connected to the control system 67 of the assessment target vehicle 61, and the control section 75 obtains the data input by the assessor 60 in a state where the program of the assessment system stored in the assessor terminal 63 is activated (step S11). For example, the assessor 60 refers to a vehicle inspection certificate of the assessment target vehicle 61 to input the registration year of the vehicle 61 and refers to a seat-belt label to input the date of manufacture of the seat-belt device. In addition to the above, appropriate data may be input by the assessor 60.

Next, the control section 75 retrieves the EDR data, which is stored in the event data storage section 69 of the vehicle 61, via the data retrieval tool 73 (step S13). At this time, the control section 75 also retrieves the vehicle system identification data used to identify the vehicle 61 and the system mounted to the vehicle 61. The vehicle system identification data may partially or entirely be input to the assessor terminal 63 by the assessor 60.

Next, the control section 75 extracts the crash-related event data, which is set in advance, from the retrieved EDR data and generates the CDR report together with the vehicle system identification data (step S15). Then, the control section 75 sends the data on the generated CDR report to the management server 10 (step S17).

In the case where the management server 10 directly retrieves the EDR data and the vehicle system identification data via the assessor terminal 63, in step S11, the assessor terminal 63 only needs to transfer the retrieved EDR data and the retrieved vehicle system identification data to the management server 10. Thus, step S15 and step S17 are omitted.

Next, the control section 75 receives the data on the accident history report that is sent from the management server 10 (step S19). Then, the control section 75 causes the display section 79 to display the accident history report on the basis of the received data on the accident history report (step S21).

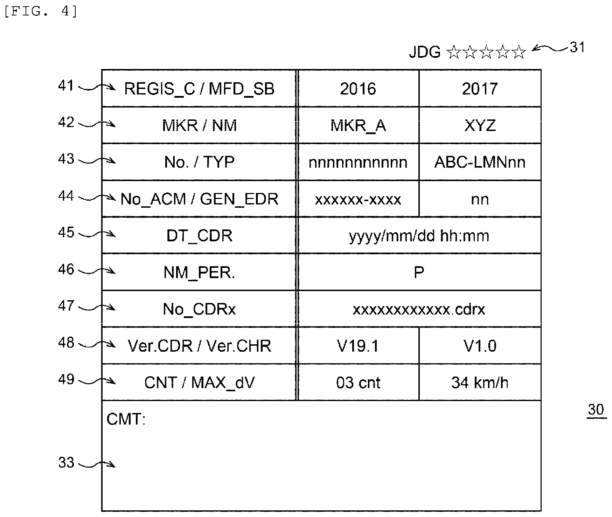

Fig. 4 illustrates an example of an accident history report 30 that is displayed. The accident history report 30 illustrated in Fig. 4 may be printed by a printer or the like for use in addition to be displayed in the display section 79 or instead of being displayed in the display section 79.

The example of the accident history report 30 illustrated in Fig. 4 displays, in a table format, data 41 on a vehicle registration year REGIS_C and date MFD_SB of manufacture of the seat-belt device, data 42 on a manufacturer MKR and a model name NM of the vehicle 61, data 43 on a body identification number No. and a type TYP, data 44 on a part number No. ACM of the airbag control module and generation GEN_EDR of an event data storage system, data 45 on generation date and time DT-CDR of the CDR report, data 46 on a data extraction worker NM_PER., data 47 on a CDR data file identification code No_CDRx as a source of the generated accident history report, data 48 on a version Ver.CDR of the software that retrieves the EDR data and generates the CDR report and a version Ver.CHR of the software that generates the accident history report from the CDR report, and data 49 on the latest crash phenomenon count CNT and a maximum speed change amount MAX_dV in the stored EDR data. The displayed accident history report 30 may include data other than the above.

In addition, in the example of the accident history report 30 illustrated in Fig. 4, information 31 on a comprehensive evaluation JDG that is determined from an accident history status of the vehicle 61 is displayed in five levels. The comprehensive evaluation JDG is classified and set to any rank according to a threshold value of each of the ranks that are set on the basis of statistical data on the number of the crash phenomena, the type of the crash phenomenon, the shock applied to the vehicle 61 at the time of the crash phenomenon, and the malfunction and replacement history of the onboard device. The comprehensive evaluation JDG is lowered as the number of crashes or the number of crash positions is increased. In addition, the comprehensive evaluation JDG is lowered as the shock applied to the vehicle 61 at the time of the crash is intensified. Furthermore, the comprehensive evaluation JDG is lowered as the number of the replacement history of the onboard device is increased. Such a comprehensive evaluation JDG is set by the accident history report generation section 21 of the management server 10.

The example of the accident history report 30 illustrated in Fig. 4 includes a display field 33 of a comment CMT about malfunction of the vehicle 61 that is estimated from the CDR report. Such a comment CMT displays the information on the possibility of the accident, which is estimated by the accident occurrence information generation section 23 of the management server 10. For example, in the display field 33 of the comment CMT, a comment "The date MFD_SB of manufacture of the seat-belt device does not match the vehicle registration year REGIS_C." or such a comment "The airbag controller has possibly been replaced, and an accident in which the airbag deployed has possibly occurred." is displayed. The display of such a comment CMT may be displayed when the assessor 60 requests the notification.

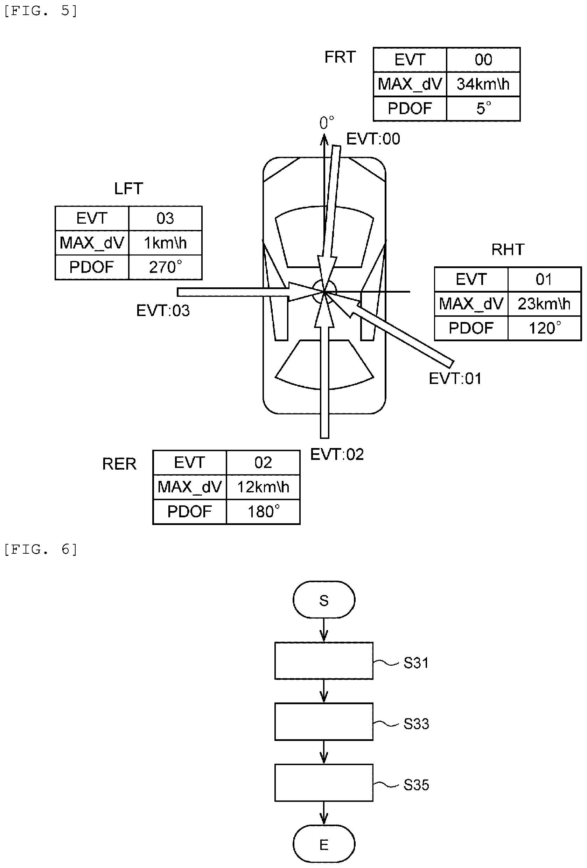

Fig. 5 illustrates another example of the accident history report 30. The accident history report 30 illustrated in Fig. 5 can be displayed together with the accident history report 30 illustrated in Fig. 4. However, the accident history report 30 illustrated in Fig. 5 may not be displayed.

The accident history report 30 illustrated in Fig. 5 illustrates, for each of the frontal crash, a left side crash, a right side crash, and the rear crash, event data of the crash phenomenon in which a value of the maximum speed change amount MAX_dV at the time of the crash is the largest. An event EVT in the drawing represents a detection order of the crash, and a principal direction of force (PDOF) represents the load input direction. The load input direction is illustrated in a 360° display with the front of a vehicle advancing direction as 0°.

The example illustrated in Fig. 5 illustrates the event data of the four crash phenomena. The first crash (EVT = 00) is the frontal crash, the maximum speed change amount MAX_dV at the time of the crash is 34 km/h, and the load input direction is 5°. The second crash (EVT = 01) is the right side crash, the maximum speed change amount MAX_dV at the time of the crash is 23 km/h, and the load input direction is 120°. The third crash (EVT = 02) is the rear crash, the maximum speed change amount MAX_dV at the time of the crash is 12 km/h, and the load input direction is 180°. The fourth crash (EVT = 03) is the left side crash, the maximum speed change amount MAX_dV at the time of the crash is 1 km/h, and the load input direction is 270°. Due to the display of such an accident history report 30, the assessor 60 can easily comprehend occurrence history of the relatively serious accidents that can affect the undercarriage structure.

### (3-2. Operation Example of Management Server)

Fig. 6 is a flowchart illustrating an example of processing that is executed by the control section 13 of the management server 10.

First, the control section 13 of the management server 10 receives the data on the CDR report that is sent from the assessor terminal 63 (step S31). The control section 13 stores the received data on the CDR report in the database 15.

Next, the accident history report generation section 21 of the control section 13 extracts some of the data on the accident history of the vehicle 61, which is set in advance, from the data on the CDR report, and executes the specified arithmetic processing to generate the accident history report (step S33). To the generated accident history report, not only the data, which is set in advance, but also appropriate data may be added in response to the request from the assessor 60. Alternatively, the generated accident history report may include the information that is generated by the accident occurrence information generation section 23 and notifies the possibility of the accident. Such information that notifies the possibility of the accident may be added in response to the request from the assessor 60.

Next, the accident history report generation section 21 sends the data on the generated accident history report to the assessor terminal 63 (step S35). In this way, the assessor terminal 63 can assess the assessment target vehicle 61 with reference to the received accident history report.

As it has been described so far, according to the management server (the event data processing device) 10 according to this embodiment, some of the data on the accident history of the vehicle 61 is extracted on the basis of the EDR data that is retrieved from the event data storage section 69 of the assessment target vehicle 61 and is sent from the assessor terminal 63, the specified arithmetic processing is executed, and the accident history report is generated. The generated accident history report is sent to the assessor terminal 63 and is used to assess the assessment target vehicle 61. Thus, the vehicle 61 can be assessed in consideration of a case where repair history is not described and the accident history that cannot be comprehended by visual inspection of interior or exterior.

In addition, the generated accident history report is generated when only the required data is extracted from the EDR data or the CDR data and the specified arithmetic processing is executed. Thus, it is possible to easily acknowledge only the information on the accident history required for the assessment, and it is thus possible to suppress an increase in a burden on the assessor 60. Furthermore, since the accident history report is generated from the conventionally used EDR data or CDR data, the accident history report can be provided to the assessor 60 without major modification or a system construction.

The preferred embodiment of the present invention has been described in detail so far with reference to the accompanying drawings. However, the present invention is not limited to such an embodiment. It is obvious that a person who has basic knowledge in the technical field to which the present invention pertains could have easily arrived at various modification examples and correction examples that fall within the scope of the technical idea described in the claims. It is understood that those naturally fall within the technical scope of the present invention.

## Claims

1. An event data processing device comprising:
an accident history report generation section (21) that generates an accident history report (30) used for assessment of a vehicle (61), wherein
the accident history report generation section (21) extracts some of data on accident history of the vehicle (61) from event data that is output from an event data storage section (69) provided to the vehicle (61) and executes specified arithmetic processing to generate the accident history report (30).

2. The event data processing device according to claim 1, wherein
the accident history report (30) includes at least one of a manufacturer of the vehicle (61), a model name, a body identification number, number of crash phenomena, a type of the crash phenomenon, and a shock applied to the vehicle at the time of a crash.

3. The event data processing device according to claim 2, wherein
the accident history report (30) includes data on either one of number of times an ignition switch is turned on or number of times an engine is started from time of production of the vehicle to time of the crash phenomenon.

4. The event data processing device according to claim 2 or 3, wherein
the accident history report (30) includes data on a registration date of the vehicle (61) and a manufactured date of a seat-belt device.

5. The event data processing device according to any one of claims 2 to 4, wherein
the accident history report (30) includes data on an actuation status of an airbag system at the time of the crash.

6. The event data processing device (10) according to any one of claims 1 to 5 further comprising:
an accident occurrence information generation section (23) that generates information on a possibility of occurrence of an accident estimated on the basis of the event data, wherein
the accident occurrence information generation section (23) outputs the generated information in response to a request from a user.

7. A vehicle assessment system comprising:
an assessor terminal (63) that retrieves event data stored in an event data storage section (69) provided to a vehicle (61); and
an event data processing device (10) that obtains the event data sent from the assessor terminal, wherein
the event data processing device (10) extracts some of data on accident history of the vehicle (61) from the acquired event data, executes specified arithmetic processing to generate an accident history report (30), and sends data on the accident history report (30) to the assessor terminal (63), and
the assessor terminal (63) is configured to be able to output the received accident history report (63).
